# EUROPÄISCHE PATENTSCHRIFT

(11) **EP 0 322 588 B1**
(45) Veröffentlichungstag und Bekanntmachung des Hinweises auf die Patenterteilung: **03.03.1993**
(21) Anmeldenummer: 88120021.6
(22) Anmeldetag: 30.11.1988
(51) Int. Cl.: F16L 55/10, E03F 3/04

(54) **Dichtung.**
Gasket
Joint

(30) Priorität: 02.03.1988 DE 3806784; 02.12.1987 DE 3740861
(43) Veröffentlichungstag der Anmeldung: 05.07.1989
(73) Patentinhaber: Enssle, Gerhard, D-86732 Oettingen (DE)
(72) Erfinder: Enssle, Gerhard, D-8867 Oettingen (DE)
(74) Vertreter: Schwabe - Sandmair - Marx

(56) Entgegenhaltungen:
- AU-B- 25 767
- DE-A- 1 484 860
- DE-A- 3 224 655
- DE-A- 3 406 505
- DE-A- 3 414 180
- DE-A- 3 539 595
- DE-A- 3 542 427

## Beschreibung

Die Erfindung betrifft einen Schacht mit einem dünnwandigen Schachtrohr, einem Abdeckkörper und einem zwischen dem Schachtrohr und dem Abdeckkörper liegenden Dichtungsring gemäß dem Oberbegriff des Anspruchs 1. Während sich Beton-Schachtrohre nur mit relativ dicken Wänden fertigen lassen, werden dünnwandige Schachtrohre aus Spezialmaterialien, nämlich Faserzement oder Kunststoff, insbesondere faserverstärktem Kunststoff (GFK), hergestellt.

Auf das obere Ende eines solchen dünnwandigen Schachtrohres, bspw. aus Faserzement, muß in aller Regel ein Abdeckkörper aufgesetzt werden, nämlich entweder eine horizontale Abdeckplatte aus Beton oder ein Beton-Ring, nämlich ein zylindrischer Ring oder ein Konus-Ring. Eine horizontale Abdeckplatte aus Beton enthält in aller Regel in ihrer Unterseite eine ringförmige Nut, in der das obere Ende des dünnwandigem Schachtrohres aufgenommen wird.

Die Trennfläche zwischen dem dünnwandigem Schachtrohr und dem relativ schweren Abdeckkörper, dessen Gewicht in der Größenordnung von mindestens 500 kg liegt, muß abgedichtet werden, um an dieser Stelle den Flüssigkeits-Ein- bzw. Austritt auszuschließen. Gleichzeitig muß gewährleistet sein, daß Pflanzenwurzeln nicht den Spalt zwischen dem dünnwandigen Schachtrohr und dem Abdeckkörper durchwachsen können.

In dem Entwurf zur DIN 19549 wird deshalb die Verwendung spezieller Dichtmittel vorgeschlagen, nämlich Zementmörtel in Verbindung mit Fugenkitt oder einem elastomeren Material. Als Basis-Abdichtung ist dabei die Einfüllung von Zementmörtel in den Spalt zwischen dem Abdeckkörper und dem dünnwandigen Schachtrohr erforderlich, so daß sich diese Dichtung nur bei spezieller Ausgestaltung der Trennfläche einsetzen läßt. Außerdem sind die mit der Einbringung dieser Dichtmittel verbundenen Arbeitsgänge aufwendig und lassen sich auf der Baustelle nicht ohne weiteres ausführen. Dies beruht insbesondere auf der Verwendung der zusätzlichen Dichtmittel wie Fugenkitt oder einem elastomeren Material, wie es zur flüssigkeitsdichten Abdichtung erforderlich ist.

Eine weitere Schwierigkeit liegt darin, daß die auf dem Markt erhältlichen dünnwandigen Schachtrohre, insbesondere Schachtrohre aus Faserzement, große Maßtoleranzen zeigen, wodurch eine entsprechende Anpassung der Abdichtung erforderlich wird.

Durch die deutsche DE-A-32 24 655 wird ein Straßeneinstieg aus zwei Elementen, nämlich einem Rahmen und einer elastischen Schalldämmeinlage offenbart. Der Rahmen weist einen radialen inneren Ansatz und einen auf dem Ansatz ruhenden Verschluß auf. Die Schalldämmeinlage besitzt einen im allgemeinen L-förmigen Querschnitt mit einem etwa waagerechten Winkel zwischen einer etwa waagerechten Umfangsfläche des Verschlusses und der Oberseite des Ansatzes des Rahmens und einem etwa senkrechten Schenkel mit radialem Spiel zwischen in etwa senkrechten Umfangsflächen des Verschlusses und des Rahmens. Ferner weist der senkrechte Schenkel der Schalldämmeinlage einen radialen örtlichen Vorsprung auf, der radial verformt ist, wenn sich der Verschluß an seinem Platz im Rahmen befindet.

Eine Muffenrohrverbindung, insbesondere für Betonmuffenrohre, Schachtringe oder dergleichen, bestehend aus Muffe, Spitzende und einem an der Muffe des einen Rohres vormontierten Dichtring aus elastomerem Material ist aus der DE-A-35 42 427 bekannt. Der Dichtring weist ein Dichtteil zur elastischen Abdichtung des Muffenspalts zwischen der Innenwand der Muffe und der Außenwand des Spitzendes und ein Halteteil auf.

Schließlich wird durch die DE-A-34 14 180 ein Dichtungsring für aneinanderstoßende, zumindest etwa rohrförmige Bauteile, insbesondere für Betonformteile, z.B. Schachtringe, vorgeschlagen, der mindestens ein durch Kompression im Stoßbereich verformbares Ringelement aus einem im wesentli- Ringelement aus einem im wesentlichen elastischen Material aufweist. Dieses Ringelement enthält einen in sich geschlossenen inneren Hohlraum, der mit einem Druckverteilungsmedium gefüllt ist bzw. befüllbar ist. Die den Hohlraum begrenzenden Wandungsteile sind verformungsfähig. Das Druckverteilungsmedium besteht aus einem Gas, einer Flüssigkeit, einer plastischen Masse oder aus einem den Hohlraum füllenden Innenring aus Vollmaterial. Bei Kompression zwischen den Dichtflächen der Betonformteile wird das Druckverteilungsmedium im Hohlraum dieser Dichtungseinrichtung unter Druck gesetzt, und zwar so, daß sich dieser Druck gleichmäßig über die gesamte Dichtungseinrichtung verteilt, um eine möglichst gleichmäßige Anpressung an die Falzflächen der Betonformteile zu gewährleisten. Das Gewicht des Abdeckkörpers wird bei Verwendung dieses Dichtungsrings vom Schachtrohr selbst abgefangen.

Der Erfindung liegt die Aufgabe zugrunde, einen Schacht mit einem dünnwandigen Schachtrohr, einem Abdeckkörper und einem zwischen dem Schachtrohr und dem Abdeckkörper liegenden Dichtungsring zu schaffen, bei dem sich der Dichtungsring auf der Baustelle problemlos montieren läßt und die Trennfläche zwischen Schachtrohr und Abdeckkörper bei einfacher konstruktiver Ausbildung des Schachtrohres und des Abdeckkörpers zuverlässig abdichtet.

Dies wird erfindungsgemäß durch die im kennzeichenden Teil des Anspruchs 1 angegebenen Merkmale erreicht.

Zweckmäßige Ausführungsformen werden durch die Merkmale der Unteransprüche definiert.

Die mit der Erfindung erzielten Vorteile beruhen auf der Verwendung eines Dichtungsrings mit Winkelprofilform aus einem elastomeren Material, der mit einem ersten Schenkel des Winkelprofils auf der Stirnfläche des Schachtrohres aufliegt und mit seinem zweiten Schenkel das Schachtrohr umspannt. Der Abdeckkörper liegt dann mit einer der Stirnfläche des Schachtrohres zugewandten Fläche auf dem ersten Schenkel des Dichtungsringes und mit einer weiteren, dem Außenmantel des Schachtrohres zugewandten Fläche auf einer Dichtungslippe am ersten Schenkel des Dichtungsringes. Mit dem ersten Schenkel können somit geringfügige Unebenheiten im Auflagebereich zwischen dem Abdeckkörper und dem dünnwandigen Schachtrohr, die bei allen Materialien zwangsläufig vorhanden sind, ausgeglichen werden, so daß keine punktförmigen Auflasten entstehen können. Die stark verformbare Dichtungslippe dient der zusätzlichen Abdichtung, wobei berücksichtigt werden muß, daß der erste Schenkel allein aufgrund des Eigengewichtes des aufgelagerten Abdeckkörpers bereits eine erhebliche Dichtfunktion besitzt. Gleichzeitig wird zuverlässig ausgeschlossen, daß Pflanzenwurzeln diesen Spalt durchwachsen können.

Diese Dichtung genügt sowohl den bisherigen Anforderungen der ATV als auch den zukünftigen DIN-Normen, die zum einen ein Auflager zwischen den einzelnen Elementen aus Mörtel als Ausgleich für etwaige Unebenheiten und zum anderen eine dauerelastische Abdichtung gegen das Eindringen von Wasser sowie die Durchwachsung durch Wurzelpflanzen verlangen.

Vorteilhafterweise werden extrudierte Winkelprofil-Schnüre aus elastomerem Material verwendet, die auf die gewünschte Länge geschnitten und dann durch Heißvulkanisation zu den fertigen, ringförmigen Dichtungen zusammengefügt werden. Es handelt sich dabei um ein elastomeren Material auf der Basis eines vulkanisierten Gemisches aus einem Styrol-Butadien-Kautschuk und Naturkautschuk (SBR/NR), wobei mindestens 60 % dieses Gemisches aus Styrol-Butadien-Kautschuk besteht.

Die Ablängung der Winkelprofil-Schnüre auf die gewünschte Länge erfolgt unter Berücksichtigung des jeweiligen Einsatzzweckes, so daß für alle in Frage kommenden Durchmesser geeignete Dichtungsringe hergestellt werden können. Die üblichen Durchmesser für solche dünnwandigen Schachtrohre liegen zwischen 800 und 1400 mm, wobei der überwiegende Teil einen Durchmesser im Bereich von 1000 bis 1200 mm hat.

Die einzelnen, auf den gewünschten Durchmesser abgestimmten Dichtungsringe werden lose angeliefert und auf der Baustelle nur einfach durch entsprechendes Ausziehen auf das dünnwandige Schachtrohr aufgespannt. Dieser "Spanndruck" reicht für die erforderliche Innendrucksicherheit von mindestens 0,1 bar aus, wie sie von dem Entwurf zur DIN 19549 festgelegt wird, die das Füllen eines Rohrschachtes bis zu seiner Oberkante vorschreibt.

Die Widerstandsfähigkeit gegen Außendrücke ist erheblich höher, da die Außenlippe der Dichtung durch eine abgeschrägte Wand, nämlich entweder des Beton-Rings oder der Nut der Beton-Abdeckplatte, zusätzlich angepreßt wird und sich dadurch ein wesentlich höherer Außendruck erzielen läßt.

Das verwendete elastomere Material entspricht den Anforderungen, die in der DIN 4060 für Dichtungsringe aus elastomeren Material für Rohrverbindungen in Entwässerungskanälen und- Leitungen zusammengestellt sind.

Die Erfindung wird im folgenden anhand eines Ausführungsbeispieles unter Bezugnahme auf die beiliegenden, schematischen Zeichnungen näher erläutert. Es zeigen
- Fig. 1: einen Querschnitt durch einen Dichtungsring mit Maßangaben,
- Fig. 2: einen Querschnitt durch den Oberteil einer Wand eines dünnwandigen Schachtrohres aus Faserzement mit dem aufgesetzten Dichtungsring,
- Fig. 3: einen Schnitt durch den Oberteil einer Wand eines dünnwandigen Schachtrohres aus Faserzement mit aufgesetztem, konischem Beton-Ring und verformtem Dichtungsring,
- Fig. 4: einen Querschnitt durch den Oberteil einer Wand eines dünnwandigen Schachtrohrs aus Faserzement mit dem aufgesetzten Dichtungsring und einer darüber angeordneten horizontalen Abdeckplatte aus Stahlbeton,
- Fig. 5: einen Schnitt durch den Oberteil einer Wand eines dünnwandigen Schachtrohres aus Faserzement mit aufgesetzter, horizontaler Abdeckplatte und verformtem Dichtungsring, und
- Fig. 6: einen Querschnitt durch eine abgewandelte Ausführungsform des Dichtungsrings.

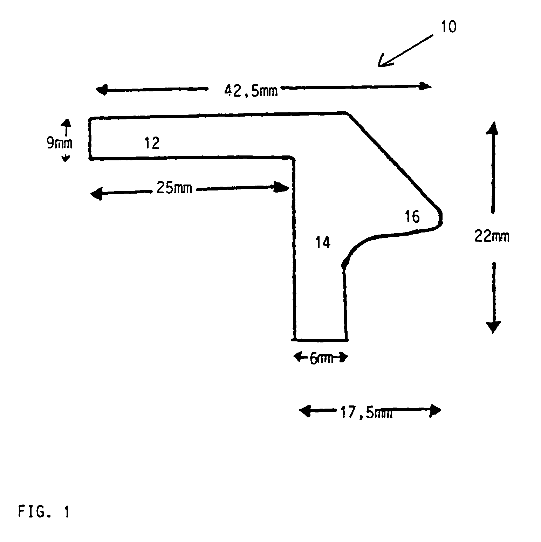

Die aus Figur 1 ersichtliche, allgemein durch das Bezugszeichen 10 angedeutete Dichtung wird als endlose Winkelprofil-Schnur extrudiert, auf die gewünschte Länge geschnitten und dann durch Heißvulkanisation zu einem Ring zusammengefügt. Als Ausgangsmaterial wird ein Elastomer auf der Basis eines vulkanisierten Gemisches von Styrol-Butadien-Kautschuk und Naturkautschuk (SBR/NR) mit mindestens 60 % Styrol-Butadien-Kautschuk eingesetzt.

Dieses Material hat die folgenden physikalischen Werte:

| | |
|---|---|
| Härte: | ca. 45° Shore A |
| Festigkeit: | 15 N/mm² |
| Dehnung: | 650 % |
| Druckverformungsrest bei 24 Std. 70° C und 40 % Verformung: | 16 % |

Wie man aus Figur 1 entnehmen kann, hat die Dichtung 10 die Form eines Winkelprofils mit einem ersten, horizontalen Schenkel 12 und einem zweiten, vertikalen Schenkel 14. Der vertikale Schenkel 14 ist außen mit einer nasenförmigen Dichtungslippe 16 versehen, deren abgeschrägte Oberkante sich etwa unter einem Winkel von 45° von der Oberkante des horizontalen Schenkels 12 nach unten erstreckt und über eine abgerundete Kante in die etwa horizontale Unterseite der Außenlippe 16 übergeht.

Bei der dargestellten Ausführungsform hat der horizontale Schenkel 12 eine Höhe von 9 mm, während der vertikale Schenkel 14 eine Breite von 6 mm hat.

Die Gesamtbreite des Winkelprofils des Dichtungsrings 10 einschließlich der Außenlippe 16 beträgt 42,5 mm und ihre Gesamthöhe 22 mm.

Die Breite zwischen der linken Kante des vertikalen Schenkels 14 und der Spitze der Außenlippe 16 beträgt 17,5 mm, wodurch sich eine Breite des horizontalen Schenkels 12 von 25 mm ergibt.

Bei Bedarf können jedoch diese Abmessungen noch variiert und an die räumlichen Gegebenheiten der Trennfläche dünnwandiges Schachtrohr/Beton-Ring oder -Platte angepaßt werden.

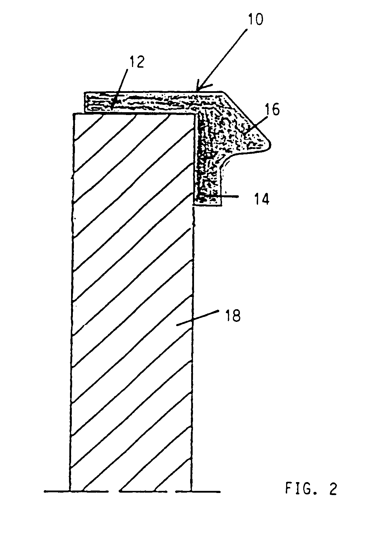

Figur 2 zeigt den oberen Randbereich eines dünnwandigen Schachtrohres 18 aus Faserzement mit dem Dichtungsring 10, dessen Schenkel 12 bzw. 14 an der Oberkante bzw. an der Außenfläche des Schachtrohres 18 anliegen.

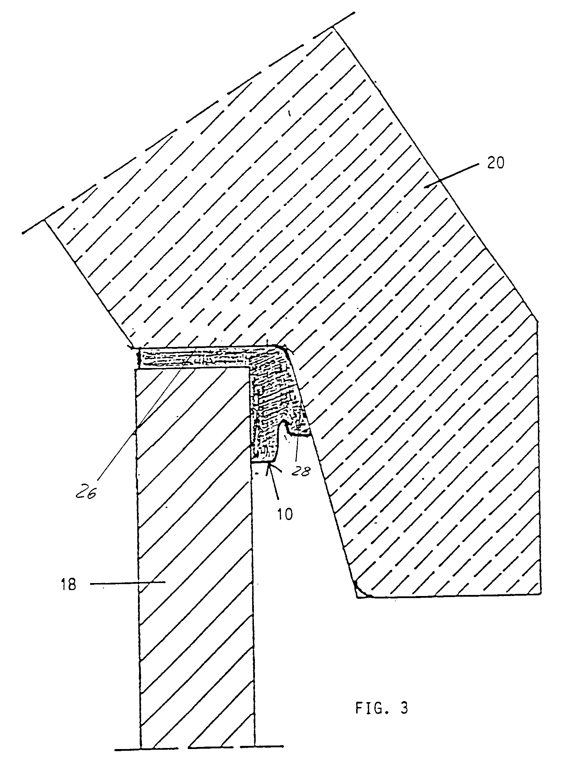

Wird nun entsprechend Figur 3 ein konischer Beton-Ring 20 auf das obere Ende des Schachtrohrs 18 und damit auf den Dichtungsring 10 aufgesetzt, so wird der horizontale Schenkel 12 des Dichtungsrings 10 durch das Gewicht des konischen Beton-Rings 20 zusammengedrückt; bei der dargestellten Ausführungsform hat der konische Beton-Ring 20 einen abgeschrägten, nach unten ragenden Überhang, der die Außenlippe 16 des Dichtungsrings 10 zusammendrückt, wie man aus einem Vergleich zwischen den Figuren 2 und 3 erkennt. Die Verformung des Dichtungsrings 10 in Verbindung mit der Belastung durch den konischen Beton-Ring 20 bewirkt die allen Anforderungen genügende Abdichtung in diesem Bereich.

Wird ein zylindrischer Beton-Ring 20 ohne Überhang verwendet, so wird nur die Unterkante dieses Beton-Rings auf den Dichtungsring 10 aufgelegt und führt ebenfalls unter Ausnutzung des Auflagedruckes zu einer ausreichenden Abdichtung in diesem Bereich. Die aus Figur 3 ersichtliche Verformung der Außenlippe 16 entfällt hierbei.

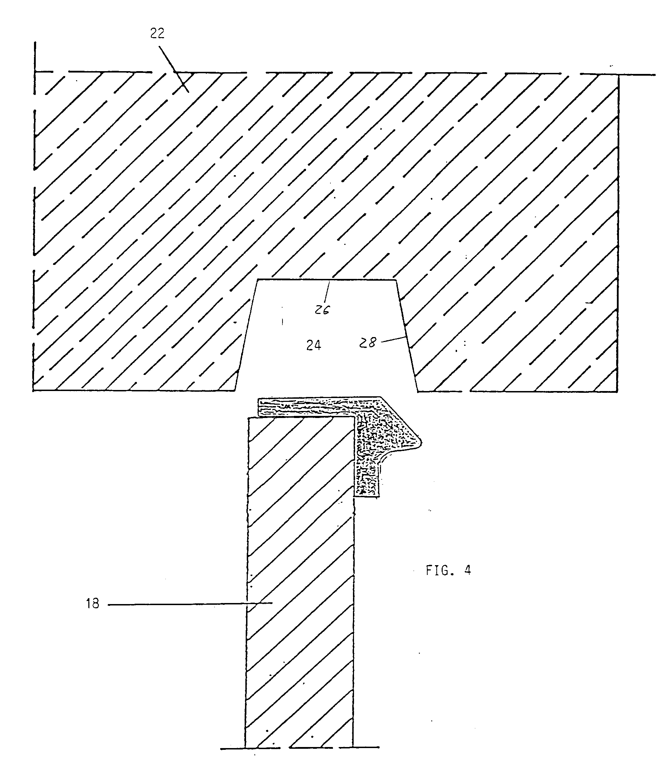

Figur 4 zeigt den oberen Randbereich des dünnwandigen Schachtrohres 18 aus Faserzement mit dem Dichtungsring 10, dessen Schenkel 12 bzw. 14 an der Oberkante bzw. an der Außenfläche des Schachtrohres 18 anliegen.

Über dem Schachtrohr 18 befindet sich eine horizontale Abdeckplatte 22 aus Stahlbeton, die an ihrer Unterseite mit einer umlaufenden, ringförmigen Nut 24 mit abgeschrägten Seitenwänden versehen ist. Die Breite der Nut 24 ist etwas größer als die Dicke der Wand des Schachtrohres 18, wie man aus Figur 4 erkennt.

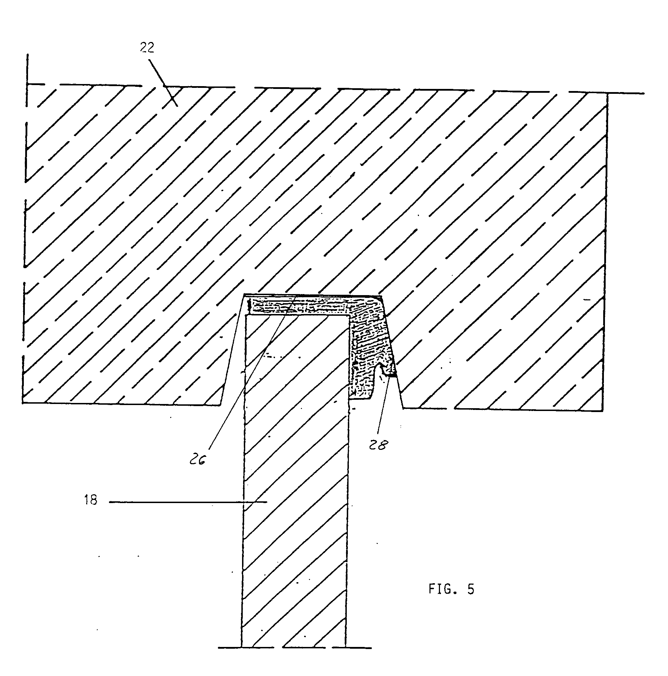

Wird nun entsprechend Figur 5 die Abdeckplatte 22 auf das obere Ende des Schachtrohres 18 und damit auf den Dichtungsring 10 aufgesetzt, so wird der horizontale Schenkel 12 des Dichtungsrings 10 durch das Gewicht der Abdeckplatte 22 zusammengedrückt; gleichzeitig drückt die gemäß der Darstellung in Figur 5 rechte, abgeschrägte Wand der Nut 24 die Außenlippe 16 des Dichtungsrings 10 zusammen, wie man aus einem Vergleich zwischen den Figuren 4 und 5 erkennt. Die Verformung des Dichtungsrings 10 in Verbindung mit der Belastung durch die Abdeckplatte 22 bewirkt die allen Anforderungen genügende Abdichtung in diesem Bereich.

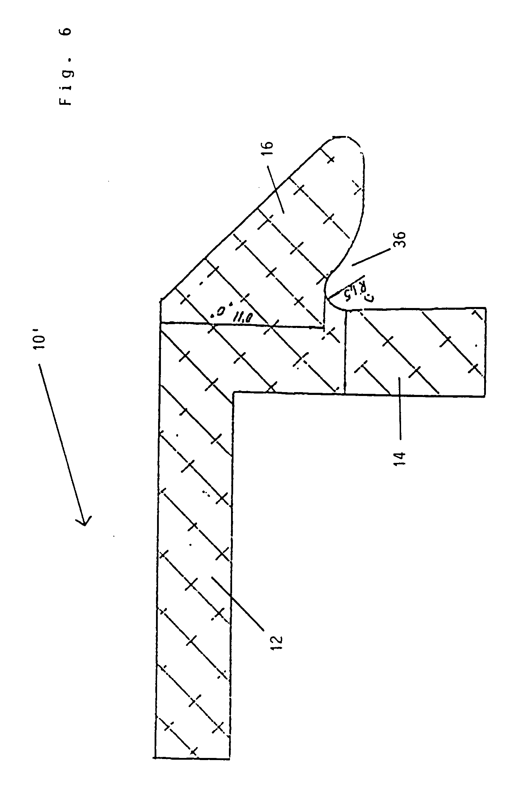

Fig. 6 zeigt eine Modifikation 10' des Dichtungsrings, die sich von der Ausführungsform 10 nach Fig. 1 nur dadurch unterscheidet, daß der Übergang zwischen der Außenlippe 16 und dem vertikalen Schenkel 14 als ausgeprägte Einbuchtung 36 mit etwa Halbkreis-Form ausgestaltet ist. Von ihrer Spitze erstreckt sich also der untere Teil der Außenlippe 16 zunächst parallel zum horizontalen Schenkel 12, also im rechten Winkel zum vertikalen Schenkel 14, auf den vertikalen Schenkel 14 zu und dann auf einer gekrümmten Linie in Richtung auf den horizontalen Schenkel 12 zu, die in der halbkreisförmigen Einbuchtung 36 endet und in die Wand des vertikalen Schenkels 14 übergeht. Die halbkreisförmige Ausbuchtung hat einen Radius von etwa 1,5 mm.

Beim Zusammenpressen dieses Dichtungsrings zwischen dem dünnwandigen Schachtrohr und dem Betonkörper ergibt sich eine Verformung der Außenlippe 16, die zu einer besonders guten Abdichtung führt.

## Patentansprüche

1. Schacht
a) mit einem dünnwandigen Schachtrohr, insbesondere aus Faserzement oder Kunststoff,
b) mit einem Abdeckkörper, insbesondere aus Beton, und
c) mit einem zwischen dem Schachtrohr und dem Abdeckkörper liegenden Dichtungsring mit Winkelprofilform aus einem elastomeren Material
c1) mit einer Dichtungslippe an einem Schenkel des Winkelprofils,
**gekennzeichnet** durch die folgenden Merkmale:
d) ein erster Schenkel (12) des Dichtungsringes (10) liegt auf der Stirnfläche des Schachtrohres (18);
e) ein zweiter Schenkel (14) des Dichtungsringes (10) umspannt das Schachtrohr (18);
f) der Abdeckkörper (20) liegt
f1) mit einer der Stirnfläche des Schachtrohres (18) zugewandten Fläche (26) auf dem ersten Schenkel (14) des Dichtungsringes (10); und
f2) liegt mit einer weiteren, dem Außenmantel des Schachtrohres (18) zugewandten Fläche (28) auf der Dichtungslippe (16) des Dichtungsringes (10).

2. Schacht nach Anspruch 1, dadurch gekennzeichnet, daß der erste Schenkel (12) des Dichtungsringes (10) eine Höhe im Bereich von 7 bis 11 mm hat.

3. Schacht nach einem der Ansprüche 1 oder 2, dadurch gekennzeichnet, daß der zweite Schenkel (14) des Dichtungsringes (10) eine Dicke im Bereich von 4 bis 8 mm hat.

4. Schacht nach einem der Ansprüche 1 bis 3, dadurch gekennzeichnet, daß der Dichtungsring (10) durch Heißvulkanisation zu dem Ring zusammengefügt ist.

5. Schacht nach einem der Ansprüche 1 bis 4, dadurch gekennzeichnet, daß der Dichtungsring (10) aus einem Elastomer auf der Basis eines vulkanisierten Gemisches aus Styrol-Butadien-Kautschuk und Naturkautschuk besteht.

6. Schacht nach Anspruch 5, dadurch gekennzeichnet, daß das Gemisch mindestens 60 % Styrol-Butadien-Kautchuk enthält.

7. Schacht nach einem der Ansprüche 1 bis 6, dadurch gekennzeichnet, daß das elastomere Material eine Shore A Härte von 40 bis 50 ^{.} hat.

8. Schacht nach einem der Ansprüche 1 bis 7, dadurch gekennzeichnet, daß der Übergang von der Dichtungslippe (16) zum zweiten Schenkel (14) des Dichtungsringes (10) halbkreisförmig ausgebuchtet ist.

9. Schacht nach Anspruch 8, dadurch gekennzeichnet, daß der Halbkreis etwa einen Radius von 1,5 mm hat.

10. Schacht nach einem der Ansprüche 1 bis 9, dadurch gekennzeichnet, daß der Abdeckkörper (20) einen zylindrischen oder konischen Beton-Ring aufweist.

11. Schacht nach einem der Ansprüche 1 bis 9, dadurch gekennzeichnet, daß der Abdeckkörper (20) eine Nut (24) zur Aufnahme des oberen Endes des Schachtrohrs (18) aufweist.

## Claims

1. Shaft comprising
a) a thin-wall shaft pipe, in particular of fibrous cement or plastic,
b) a cover body, in particular of concrete, and
c) a sealing ring with angular profile form and consisting of an elastomeric material lying between the shaft pipe and the cover body and having
c1) a sealing lip on one leg of the angular profile,
characterized by the following features:
d) a first leg (12) of the sealing ring (10) bears on the end face of the shaft pipe (18);
e) a second leg (14) of the sealing ring (10) surrounds the shaft pipe (18);
f) the cover body (20) lies
f1) with a face (26) facing the end face of the shaft pipe (18) on the first leg (14) of the sealing ring (10); and
f2) with a further face (28) facing the outer surface of the shaft pipe (18) on the sealing lip (16) of the sealing ring (10).

2. Shaft according to claim 1, characterized in that the first leg (12) of the sealing ring (10) has a height in the range from 7 to 11 mm.

3. Shaft according to claim 1 or 2, characterized in that the second leg (14) of the sealing ring (10) has a thickness in the range from 4 to 8 mm.

4. Shaft according to any one of claims 1 to 3, characterized in that the sealing ring (10) is joined to form a ring by hot vulcanisation.

5. Shaft according to any one of claims 1 to 4, characterized in that the sealing ring (10) consists of an elastomer on the basis of a vulcanised mixture of styrene-butadiene rubber and natural rubber.

6. Shaft according to claim 5, characterized in that the mixture contains at least 60 % styrene-butadiene rubber.

7. Shaft according to any one of claims 1 to 6, characterized in that the elastomeric material has a Shore A hardness of 40 to 50 ^{.} .

8. Shaft according to any one of claims 1 to 7, characterized in that the transition from the sealing lip (16) to the second leg (14) of the sealing ring (10) is bulged semicircularly.

9. Shaft according to claim 8, characterized in that the semicircle has a radius of 1.5 mm.

10. Shaft according to any one of claims 1 to 9, characterized in that the cover body (20) has a cylindrical or conical concrete ring.

11. Shaft according to any one of claims 1 to 9, characterized in that the cover body (20) has a groove (24) for receiving the upper end of the shaft pipe (18).

## Revendications

1. Puits comportant
a) une cheminée à paroi mince, en particulier en fibrociment ou en matière plastique,
b) un élément de recouvrement en particulier en béton, et
c) un joint annulaire d'étanchéité se trouvant entre la cheminée et l'élément de recouvrement en forme de cornière en un matériau élastomère
c1) une lèvre d'étanchéité sur une branche de la cornière,
caractérisé par les caractéristiques suivantes :
d) une première branche (12) du joint annulaire d'étanchéité (10) repose sur la surface frontale de la cheminée (18) ;
e) une seconde branche (14) du joint annulaire d'étanchéité (10) entoure la cheminée (18) ;
f) l'élément de recouvrement (20) se trouve
f1) avec une surface (26) tournée vers la surface frontale de la cheminée (18) sur la première branche (14) du joint annulaire (10) ; et
f2) se trouve avec une autre surface (28) tournée vers la surface latérale extérieure de la cheminée (18) sur la lèvre d'étanchéité (16) du joint annulaire d'étanchéité (10).

2. Puits selon la revendication 1, caractérisé en ce que la première branche (12) du joint annulaire d'étanchéité (10) possède une hauteur comprise entre 7 et 11 mm.

3. Puits selon l'une des revendications 1 ou 2, caractérisé en ce que la seconde branche (14) du joint annulaire d'étanchéité (10) possède une épaisseur comprise entre 4 et 8 mm.

4. Puits selon l'une quelconque des revendications 1 à 3, caractérisé en ce que le joint annulaire d'étanchéité (10) est conformé en anneau par vulcanisation à chaud.

5. Puits selon l'une quelconque des revendications 1 à 4, caractérisé en ce que le joint annulaire d'étanchéité (10) est en un élastomère à base d'un mélange vulcanisé de caoutchouc-butadiène-styrène et de caoutchouc naturel.

6. Puits selon la revendication 5, caractérisé en ce que le mélange contient au moins 60% de caoutchouc-butadiène-styrène.

7. Puits selon l'une quelconque des revendications 1 à 6, caractérisé en ce que le matériau élastomère possède une dureté Shore A de 40 à 50 .

8. Puits selon l'une quelconque des revendications 1 à 7, caractérisé en ce que la transition entre la lèvre d'étanchéité (16) et la seconde branche (14) du joint annulaire d'étanchéité (10) est emboutie de façon semi-circulaire.

9. Puits selon la revendication 8, caractérisé en ce que le demi-cercle possède un rayon d'environ 1,5 mm.

10. Puits selon l'une quelconque des revendications 1 à 9, caractérisé en ce que l'élément de recouvrement (20) présente un anneau de béton cylindrique ou conique.

11. Puits selon l'une quelconque des revendications 1 à 9, caractérisé en ce que l'élément de recouvrement (20) présente une rainure (24) pour la réception de l'extrémité supérieure de la cheminée (18).
